# EUROPEAN PATENT SPECIFICATION

(11) **EP 3 918 215 B1**
(45) Date of publication and mention of the grant of the patent: **05.11.2025**
(21) Application number: 20703312.7
(22) Date of filing: 29.01.2020
(51) Int. Cl.: F16C 11/12, B25J 13/08, B25J 17/00

(54) **ROBOT JOINT AS WELL AS ROBOT ARM PROVIDED WITH SUCH ROBOT JOINT**
ROBOTERGELENK SOWIE MIT SOLCH EINEM ROBOTERGELENK AUSGESTATTETER ROBOTERARM
ARTICULATION DE ROBOT ET BRAS DE ROBOT POURVU D'UNE TELLE ARTICULATION DE ROBOT

(30) Priority: 29.01.2019 NL 2022473
(43) Date of publication of application: 08.12.2021
(73) Proprietor: van Lieshout, Richard Henricus Adrianus, 6603 KT Wijchen (NL)
(72) Inventor: JANSSEN, Jacobus Henricus Johannes, 5443BD Haps (NL); LIESHOUT, VAN, Richard Henricus Adrianus, 6603KT Wijchen (NL)
(74) Representative: Verhees, Godefridus Josephus Maria
(86) International application number: PCT/NL2020/050048
(87) International publication number: WO 2020/159365

(56) References cited:
- CN-B- 105 605 090
- US-A- 5 620 169
- US-A1- 2012 210 774

## Description

### Technical field of the invention

The invention relates to a robot joint comprising at least two elements rotatable about a common joint axis, and more specifically to a robot joint according to the preamble of appended claim 1.

### Background of the invention

A robot joint according to the preamble of claim 1 is known from CN105605090B.

In horticulture, the scarcity of personnel for harvesting, sorting and packaging of fruit and vegetables is becoming an increasingly pressing problem. This scarcity is such that growers fear the continuity of their business, which also jeopardizes food supply. Automating processing in horticulture is technically feasible, but it has turned out that growers are reluctant to make the switch. This is on the one hand because the investment in robots is still very expensive.

Typically, ball bearings are used in robotic arms, which have friction, play and a shifting behavior over the lifetime. Typical robots in the market do have a good reproducibility in terms of positioning (often even a few hundredths of an inch), but in terms of absolute accuracy they are not good.

That is why a robot with a low cost is desired. This is achieved by providing the robot with an arm that cannot make more than the necessary movement, so that the joint only has to allow rotation through a limited angle. A low cost price is hereby possible by applying a robot joint with a working principle based on the properties of leaf springs. A disadvantage of such a robot joint is that the position of the elements relative to each other during rotation is not very accurate because the point of rotation moves during rotation.

### Summary of the invention

An object of the invention is to provide a robot joint in which the elements can be rotated with high accuracy through a limited angle with respect to each other. To this end, the robot joint according to the invention is characterized in that the robot joint further comprises measuring means which measure the angle through which the two elements rotate relative to each other, which measuring means are connected to the rotatable elements and are integrated at least partly in the rotatable elements. By measuring the rotation of the elements of the robot joint relative to each other and linking it back to the robot arm drive, the consequences of the inaccuracy in the joint can be compensated. By partially integrating the measuring means into the elements and connecting them to the elements, the cost price of the robot joint can be kept low. The inaccuracy as a result of the displacement of the point of rotation during the rotation can be corrected here because this displacement as a function of the angular rotation is always the same. The absolute position accuracy can be further improved by using a calibration routine. Any deviations in positioning that result from cost savings in the mechanical design of the robot joint can be automatically compensated for by controlling the drive, making use of sensors in the robot joint. The robot joint according to the invention makes it possible that the use of expensive mechanical joints can be avoided by using low-cost controlling and correcting electronics and controls with smart software algorithms. The leaf springs thus each extend in a flat plane, these planes intersect each other in a cutting line and each leaf spring extends on either side of the cutting line.

It is noted that from US2012/0210774A a viscosity meter is known which is provided with a joint with an operating principle based on the properties of leaf springs. Measuring means are also present in this case for measuring the angular rotation of the two elements rotatable relative to each other. However, there are no provisions to use the measuring means for controlling the rotation of the two elements relative to each other. Furthermore, each leaf spring extends in radial direction between the two tubes and is thereby located on one side of the cutting line. Therefore the leaf springs do not cross each other.

An embodiment of the robot joint according to the invention is characterized in that the elements are formed by two concentric cylinders, the inner cylinder of which is provided with openings through which the leaf springs protrude.

A further embodiment of the robot joint according to the invention is characterized in that the robot joint further comprises a further cylinder that is concentric to said two cylinders and in the axial direction is present adjacent one of these cylinders, wherein the other cylinder also extends in or over this further cylinder and is connected to this further cylinder via at least two further crossing radial leaf springs. This makes a larger angular rotation between the two outer cylinders possible. In the version with electric motors, the stator and the rotor must then be connected to the two outer cylinders.

A still further embodiment of the robot joint according to the invention is characterized in that the leaf springs cross one another without being stuck to each other, wherein in and near the center, the leaf springs are provided with holes and the parts between the holes of one of the leaf springs protrude through the holes in the other leaf spring and vice versa. The available axial length of the joint can be optimally utilized and a joint is obtained which is compact in the axial direction.

A further embodiment of the robot joint according to the invention is characterized in that the measuring means comprise markings and detection means for counting the number of markings that passes the detection means during rotation of the two cylinders relative to each other, which markings are uniformly distributed over at least a part of the circumference on or in the cylinder wall of one of the cylinders, and which detection means are connected to the other cylinder. As a result, the angular rotation of the cylinders relative to each other can be measured with simple and therefore inexpensive means. The markings are preferably formed by holes in the cylinder wall.

A still further embodiment of the robot joint according to the invention is characterized in that it further comprises interaction means comprising two parts that can be rotated relative to each other, one of the parts being connected with one of the elements is and the other part is connected to the other element. These interaction means can, for instance, be formed by a brake disc/brake drum and a brake caliper or brake pads to brake the rotatable parts relative to each other or to block them against rotation relative to each other. The interaction means can for instance also be formed by a spring, one end of which is connected to one of the elements and the other end to the other element. This spring can, for example, compensate for the force exerted by one cylinder on the other cylinder as a result of gravity.

The interaction means can also be formed by an electric motor, one of the parts being formed by a stator and the other part by a rotor. By integrating the motor for rotating the joint parts relative to each other in the robot joint, a further cost reduction can be achieved when the joint is used in a robot arm. In this case, an air gap is preferably present between the two elements in order to compensate for the shift of the axis about which the two elements rotate relative to each other during rotation, and a contactless direct drive motor is used as the electric motor so that during the entire lifetime there will be a high positional accuracy because no wear occurs.

The one part and/or the other part of the interaction means and the cylinder connected thereto are preferably manufactured in one piece, for example by 3D printing, so that the production costs can be limited. Preferably, the two cylinders with the at least two leaf springs are also manufactured in one piece.

The invention also relates to a robot arm provided with two arm parts which are connected to each other via a robot joint according to the invention, wherein one of the arm parts is connected to one of the elements and the other arm part is connected to the other element and wherein one of the arm parts is further connected to manipulation means for manipulating objects. Manipulation means can be a gripper for gripping objects.

### Brief description of the drawings

The invention will be explained in more detail below with reference to exemplary embodiments of the robot joint according to the invention shown in the drawings. Hereby:
Figure 1 shows a first embodiment of the robot joint according to the invention in perspective;
Figure 2 shows the robot joint shown in Figure 1 in longitudinal section;
Figure 3 shows a second embodiment of the robot joint according to the invention in side view;
Figure 4 shows the robot joint shown in Figure 3 in longitudinal section;
Figure 5 is a perspective view of the robot joint shown in Figure 3;
Figure 6 shows the robot joint shown in Figure 5 in longitudinal section;
Figure 7 shows a third embodiment of the robot joint according to the invention with a cut-away part; and
Figure 8 shows the robot joint shown in Figure 7 in cross section.

### Detailed description of the drawings

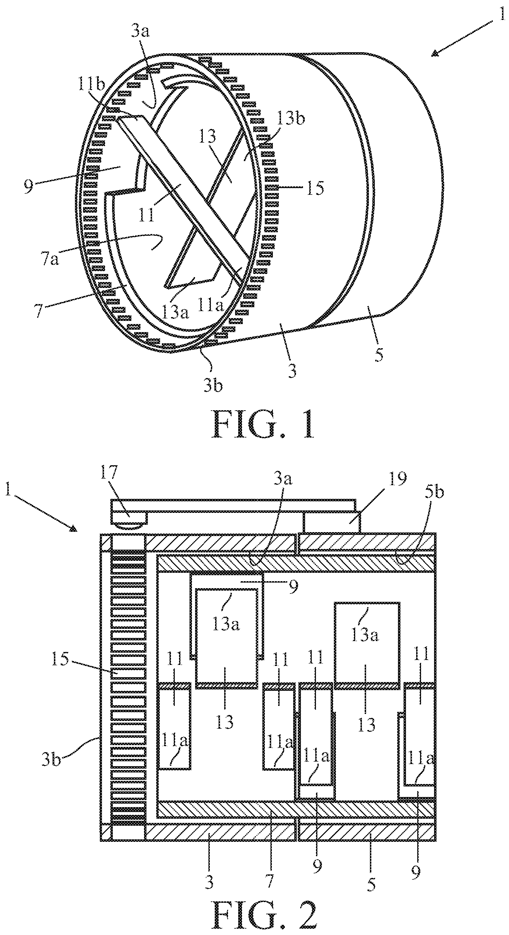

Figure 1 shows a first embodiment of the robot joint according to the invention in perspective and Figure 2 shows this robot joint in longitudinal section. The robot joint 1 has two outer cylinders 3 and 5 concentrically located one behind the other in axial direction and an inner cylinder 7 extending concentrically within the two outer cylinders. This inner cylinder is provided with openings 9 in the cylinder wall which openings in tangential direction extend over a part of the circumference.

The inner cylinder 7 is connected via radially extending leaf springs 11 and 13 to the two outer cylinders 3 and 5. These leaf springs with an end 11a, 13a are each attached to the inside 7a of the inner cylinder 7 directly opposite one of the openings 9 and are secured with the other end 11b, 13b to the inside 3a of one of the outer cylinders 3 and 5, whereby they protrude through one of the openings 9. Each outer cylinder 3, 5 is connected to the inner cylinder 7 via three leaf springs 11, 13. These leaf springs are formed by a wide middle leaf spring 13 and two narrower outer leaf springs 11 which extend perpendicular to the wide leaf spring 13 and are located on either side of this wide leaf spring.

The outer cylinders 3 and 5 can be rotated with respect to the inner cylinder 7 over an angle, equal to the angle over which the openings 9 extend. As a result, the two outer cylinders can thus rotate relative to each other at a maximum over an angle that is twice the angle over which the openings extend. The two outer cylinders 3, 5, the inner cylinder 7 and the leaf springs 11, 13 are integrally formed by 3D printing.

One of the outer cylinders 3 is at the end 3b turned away from the other outer cylinders 5 provided with markings 15 formed by holes. These holes can be detected by a sensor 17 connected to the other outer cylinder 5. The sensor 17 is connected to an electronic unit 19 which counts the number of holes that passes the sensor during rotation of the two outer cylinders relative to each other.

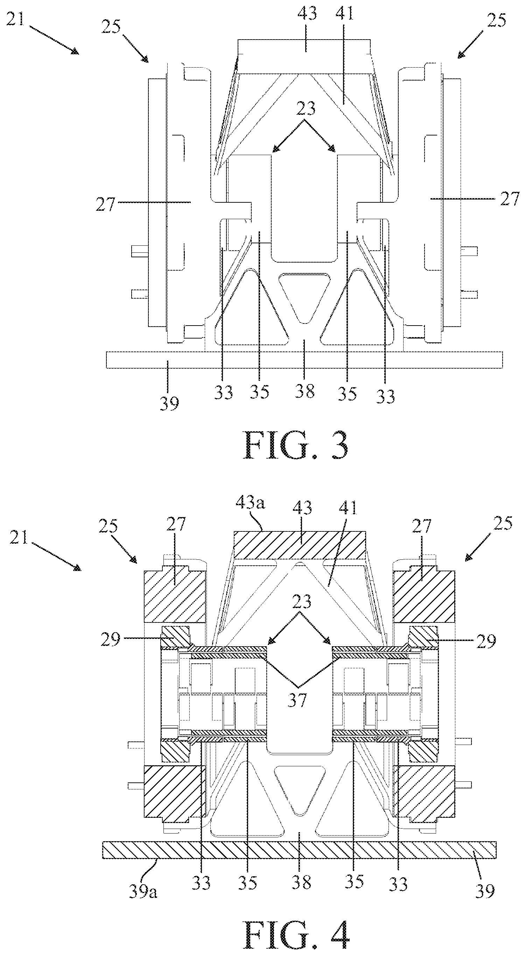

Figure 3 shows a second embodiment of the robot joint according to the invention in perspective and Figure 4 shows this robot joint in longitudinal section. This robot joint forms a composite joint 21 of two series-connected joints 23 of the above-described type and two electric motors 25. The electric motors each have a stator 27 and a rotor 29, the rotor being integral with one of the outer cylinders 33 of the joint 23 and the stator 27 is connected to the other outer cylinder 35 of the joint 23. The two outer cylinders 33 and 35 are connected to the inner cylinder 37 via leaf springs. Each joint 23 and the rotor 29 connected thereto are formed as in one piece by means of 3D printing.

The two outer cylinders 35 facing each other of the two robot joints 21, which are connected to the stators 27 of the electric motors 25, are connected via arms 38 to a first mounting element 39 and the other two outer cylinders 33, which are connected with the rotors 29 of the electric motors 25, are connected via further arms 41 to a second mounting element 43. Each mounting element 39, 43 is provided with a mounting surface 39a, 43a to which a part of a robot arm can be attached.

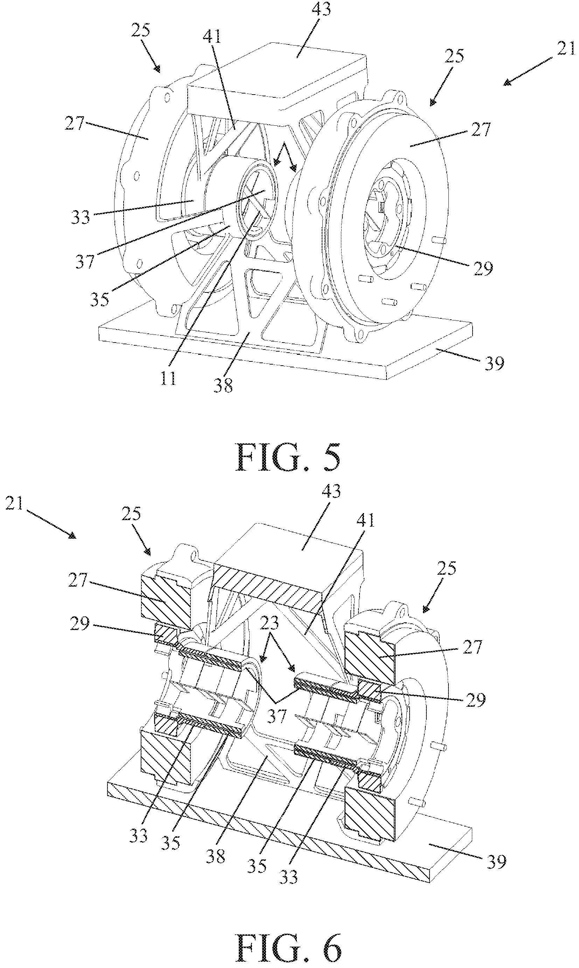

For clarification, Figures 5 and 6 show the robot joint in perspective and in a longitudinal section in perspective.

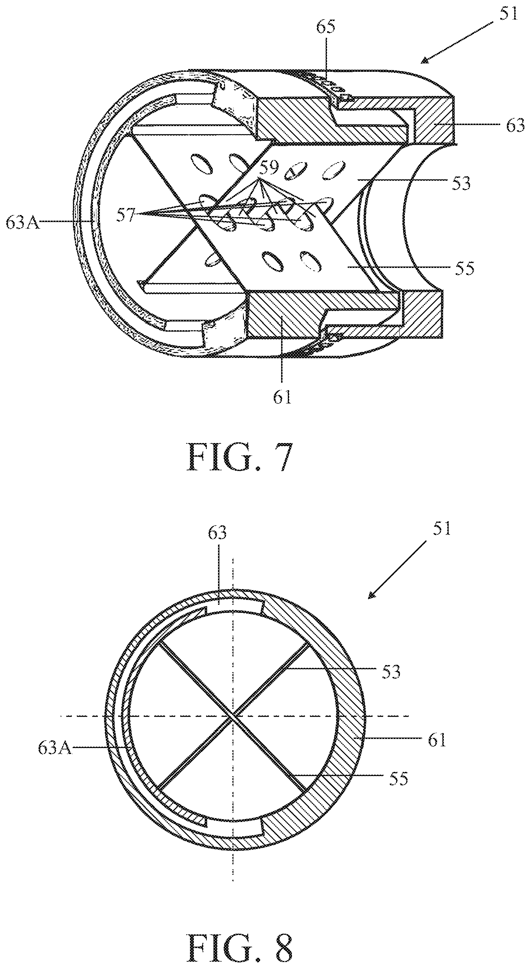

Figure 7 shows a third embodiment of the robot joint according to the invention in perspective with a part cut away and Figure 8 shows this joint in cross-section. In this robot joint 51, the leaf springs 53 and 55 cross each other without being stuck together. The leaf springs are in their middle provided with holes 57, parts 59 of the leaf springs being present between these holes. These parts 59 of one leaf spring protrude through the holes 57 present in the other leaf spring and vice versa.

The leaf springs 53 and 55 are attached with one end to the inside of a first cylinder 61 and are attached to a cylinder part 63A with the other end. This cylinder part 63A is attached to cylinder 63 which is provided on the outside with markings 65 that can be detected by a sensor in order to be able to measure the rotation.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. A robot joint (1; 21) comprising at least two elements (3, 7; 33, 37) rotatable about a common joint axis, the rotatable elements (3, 7; 33, 37) facing each other diametrically with respect to the common joint axis, and which elements are connected to each other via at least two radially extending leaf springs (11, 13) crossing each other in or near the common joint axis such that the elements are rotatable through a limited angle with respect to each other and upon rotation of the elements relative to each other about the common joint axis the elements bend the leaf springs, **characterized in that** the robot joint further comprises measuring means (15, 17, 19) which measure the angle through which the two elements rotate relative to each other, which measuring means (15, 17, 19) are connected to the rotatable elements (3, 7; 33, 37) and are integrated at least partly in the rotatable elements.

2. Robot joint (1; 21) according to claim 1, **characterized in that** the elements are formed by two concentric cylinders (3, 7), the inner cylinder (7) of which is provided with openings (9) through which the leaf springs (11, 13) protrude.

3. Robot joint (1; 21) according to claim 2, **characterized in that** the robot joint further comprises a further cylinder (5; 35) that is concentric to said two cylinders (3, 7; 33, 37) and in the axial direction is present adjacent one of these cylinders (3; 33), wherein the other cylinder (7; 37) also extends in or over this further cylinder (5; 35) and is connected to this further cylinder via at least two further crossing radial leaf springs (11, 13).

4. Robot joint (1; 21) according to claim 1, **characterized in that** the leaf springs cross one another without being stuck to each other, wherein in and near the center, the leaf springs are provided with holes and the parts between the holes of one of the leaf springs protrude through the holes in the other leaf spring and vice versa.

5. Robot joint (1; 21) according to one of the preceding claims, **characterized in that** the measuring means comprise markings (15) and detection means (17, 19) for counting the number of markings that passes the detection means (17, 19) during rotation of the two cylinders (3, 7) relative to each other, which markings (15) are uniformly distributed over at least a part of the circumference on or in the cylinder wall of one of the cylinders (3), and which detection means (17, 19) are connected to the other cylinder (7).

6. Robot joint (1; 21) according to claim 5, **characterized in that** the markings are formed by holes (15) in the cylinder wall.

7. Robot joint (21) as claimed in any one of the preceding claims, **characterized in that** the robot joint further comprises interaction means (25) comprising two parts (27, 29) that can be rotated relative to each other, one of the parts (27) being connected with one of the elements (37) is and the other part (29) is connected to the other element (33).

8. Robot joint (21) according to claim 7, **characterized in that** said one part (27) and/or said other part (29) of the interaction means (25) and the element (33, 37) connected thereto are manufactured integrally.

9. Robot joint (21) according to claim 7 or 8, **characterized in that** the interaction means are formed by an electric motor (25), one of the parts being formed by a stator (27) and the other part by a rotor (29), and wherein an air gap is present between the two elements (3, 7).

10. Robot joint (1; 21) according to one of the preceding claims, **characterized in that** the two elements (3, 7; 33, 37) with the at least two leaf springs (11, 13) are made in one piece.

11. Robot arm comprising two arm parts which are connected to each other via a robot joint (21) according to one of the preceding claims, wherein one of the arm parts is connected to one of the elements (33) and the other arm part is connected to the other element (37) and wherein one of the arm parts is further connected to manipulation means for manipulating objects.

## Patentansprüche

1. Robotergelenk (1; 21) mit mindestens zwei um eine gemeinsame Gelenkachse drehbaren Elementen (3, 7; 33, 37), wobei die drehbaren Elemente (3, 7; 33, 37) einander diametral zur gemeinsamen Gelenkachse gegenüberliegen und über mindestens zwei radial verlaufende Blattfedern (11, 13) miteinander verbunden sind, die sich in oder nahe der gemeinsamen Gelenkachse kreuzen, sodass die Elemente um einen begrenzten Winkel zueinander drehbar sind und bei Drehung der Elemente relativ zueinander um die gemeinsame Gelenkachse die Blattfedern verbiegen, wobei das Robotergelenk außerdem Messmittel (15, 17, 19) umfasst, die den Winkel messen, um den die beiden Elemente relativ zueinander rotieren, wobei diese Messmittel (15, 17, 19) mit den drehbaren Elementen (3, 7; 33, 37) verbunden sind und zumindest teilweise in die drehbaren Elemente integriert sind.

2. Robotergelenk (1; 21) nach Anspruch 1, **dadurch gekennzeichnet, dass** die Elemente durch zwei konzentrische Zylinder (3, 7) gebildet sind, deren innerer Zylinder (7) mit Öffnungen (9) versehen ist, durch die die Blattfedern (11, 13) ragen.

3. Robotergelenk (1; 21) nach Anspruch 2, **dadurch gekennzeichnet, dass** das Robotergelenk zusätzlich einen weiteren Zylinder (5; 35) umfasst, der konzentrisch zu den beiden Zylindern (3, 7; 33, 37) angeordnet ist und in axialer Richtung neben einem dieser Zylinder (3; 33) liegt, wobei der andere Zylinder (7; 37) ebenfalls in oder über diesem weiteren Zylinder (5; 35) verläuft und über mindestens zwei weitere, sich kreuzende radiale Blattfedern (11, 13) mit diesem verbunden ist.

4. Robotergelenk (1; 21) nach Anspruch 1, **dadurch gekennzeichnet, dass** sich die Blattfedern kreuzen, ohne miteinander zu verkleben, wobei die Blattfedern in und nahe der Mitte mit Löchern versehen sind und die Teile zwischen den Löchern einer Blattfeder durch die Löcher der anderen Blattfeder ragen und umgekehrt.

5. Robotergelenk (1; 21) nach einem der vorhergehenden Ansprüche, **dadurch gekennzeichnet, dass** die Messmittel Markierungen (15) und Erfassungsmittel (17, 19) zum Zählen der Anzahl der Markierungen umfassen, die die Erfassungsmittel (17, 19) während der Drehung der beiden Zylinder (3, 7) relativ zueinander passiere, wobei die Markierungen (15) gleichmäßig über mindestens einen Teil des Umfangs an oder in der Zylinderwand eines der Zylinder (3) verteilt sind und die Erfassungsmittel (17, 19) mit dem anderen Zylinder (7) verbunden sind.

6. Robotergelenk (1; 21) nach Anspruch 5, **dadurch gekennzeichnet, dass** die Markierungen durch Löcher (15) in der Zylinderwand gebildet sind.

7. Robotergelenk (21) nach einem der vorhergehenden Ansprüche, **dadurch gekennzeichnet, dass** das Robotergelenk ferner ein Interaktionsmittel (25) umfasst, das aus zwei relativ zueinander drehbaren Teilen (27, 29) besteht, wobei eines der Teile (27) mit einem der Elemente (37) und das andere Teil (29) mit dem anderen Element (33) verbunden ist.

8. Robotergelenk (21) nach Anspruch 7, **dadurch gekennzeichnet, dass** das eine Teil (27) und/oder das andere Teil (29) des Interaktionsmittels (25) und das damit verbundene Element (33, 37) einstückig gefertigt sind.

9. Robotergelenk (21) nach Anspruch 7 oder 8, **dadurch gekennzeichnet, dass** die Interaktionsmittel durch einen Elektromotor (25) gebildet sind, wobei eines der Teile durch einen Stator (27) und das andere durch einen Rotor (29) gebildet ist und zwischen den beiden Elementen (3, 7) ein Luftspalt besteht.

10. Robotergelenk (1; 21) nach einem der vorhergehenden Ansprüche, **dadurch gekennzeichnet, dass** die beiden Elemente (3, 7; 33, 37) mit den mindestens zwei Blattfedern (11, 13) einstückig gefertigt sind.

11. Roboterarm mit zwei Armteilen, die über ein Robotergelenk (21) nach einem der vorhergehenden Ansprüche miteinander verbunden sind, wobei eines der Armteile mit einem der Elemente (33) und das andere Armteil mit dem anderen Element (37) verbunden ist und wobei eines der Armteile zudem mit Manipulationsmitteln zur Manipulation von Objekten verbunden ist.

## Revendications

1. Articulation de robot (1; 21) comprenant au moins deux éléments (3, 7; 33, 37) rotatifs autour d'un axe articulaire commun, ces éléments rotatifs (3, 7; 33, 37) se font face diamétralement par rapport à cet axe articulaire commun et sont reliés par au moins deux ressorts à lames (11, 13) s'étendant radialement et se croisant dans ou à proximité de cet axe articulaire commun, de cette manière, les éléments peuvent tourner selon un angle limité et, lors de leur rotation autour de cet axe articulaire commun, les ressorts à lames se courbent, l'articulation de robot comprend en outre des moyens de mesure (15, 17, 19) mesurant l'angle de rotation des deux éléments, ces moyens de mesure (15, 17, 19) sont reliés aux éléments rotatifs (3, 7; 33, 37) et intégrés au moins partiellement à ces derniers.

2. Articulation de robot (1; 21) selon la revendication 1, **caractérisée en ce que** les éléments sont constitués de deux cylindres concentriques (3, 7), dont le cylindre intérieur (7) est pourvu d'ouvertures (9) traversées par les ressorts à lames (11, 13).

3. Articulation de robot (1; 21) selon la revendication 2, **caractérisée en ce que** l'articulation de robot comprend en outre un autre cylindre (5; 35) concentrique aux deux cylindres (3, 7; 33, 37) et adjacent axialement à l'un de ces cylindres (3; 33), l'autre cylindre (7; 37) s'étendant également dans ou au-dessus de cet autre cylindre (5; 35) et y étant relié par au moins deux autres ressorts à lames radiaux croisés (11, 13).

4. Articulation de robot (1; 21) selon la revendication 1, **caractérisée en ce que** les ressorts à lames se croisent sans être collés l'un à l'autre, les ressorts à lames ont percés de trous au centre et à proximité de leur centre, et les parties entre les trous de l'un des ressorts à lames dépassent des trous de l'autre ressort à lames, et inversement.

5. Articulation de robot (1; 21) selon l'une des revendications précédentes, **caractérisée en ce que** les moyens de mesure comprennent des marquages (15) et des moyens de détection (17, 19) permettant de compter le nombre de marquages franchissant les moyens de détection (17, 19) lors de la rotation des deux cylindres (3, 7) l'un par rapport à l'autre, ces marquages (15) sont uniformément répartis sur au moins une partie de la circonférence de la paroi de l'un des cylindres (3), et ces moyens de détection (17, 19) sont reliés à l'autre cylindre (7).

6. Articulation de robot (1; 21) selon la revendication 5, **caractérisée en ce que** les marquages sont formés par des trous (15) dans la paroi du cylindre.

7. Articulation de robot (21) selon l'une quelconque des revendications précédentes, **caractérisée en ce qu'**elle comprend en outre un moyen d'interaction (25) comprenant deux parties (27, 29) rotatives l'une par rapport à l'autre, l'une (27) étant reliée à l'un des éléments (37) et l'autre (29) à l'autre élément (33).

8. Articulation de robot (21) selon la revendication 7, **caractérisée en ce que** ladite partie (27) et/ou ladite autre partie (29) du moyen d'interaction (25) et l'élément (33, 37) qui leur est relié sont fabriqués d'un seul tenant.

9. Articulation de robot (21) selon la revendication 7 ou 8, **caractérisée en ce que** les moyens d'interaction sont constitués par un moteur électrique (25), l'une des parties étant constituée d'un stator (27) et l'autre d'un rotor (29), et un entrefer étant présent entre les deux éléments (3, 7).

10. Articulation de robot (1; 21) selon l'une des revendications précédentes, **caractérisée en ce que** les deux éléments (3, 7; 33, 37) avec au moins deux ressorts à lames (11, 13) sont réalisés d'une seule pièce.

11. Bras de robot comprenant deux parties reliées l'une à l'autre par une articulation de robot (21) selon l'une des revendications précédentes, l'une des parties étant reliée à l'un des éléments (33) et l'autre à l'autre élément (37), et l'une des parties étant en outre reliée à des moyens de manipulation d'objets.
